# EUROPÄISCHE PATENTSCHRIFT

(11) **EP 2 463 932 B1**
(45) Veröffentlichungstag und Bekanntmachung des Hinweises auf die Patenterteilung: **15.06.2016**
(21) Anmeldenummer: 11192876.8
(22) Anmeldetag: 09.12.2011
(51) Int. Cl.: H01M 10/613, H01M 10/6554, H01M 2/02, H01M 2/10, H01M 10/04, H01M 10/052, H01M 10/0585, H01M 2/20

(54) **Verfahren zum Aufbau einer elektrochemischen Energiespeichereinheit**
Method for creating an electrochemical energy storage unit
Procédé de montage d'une unité d'accumulation d'énergie électrochimique

(30) Priorität: 09.12.2010 DE 102010062744
(43) Veröffentlichungstag der Anmeldung: 13.06.2012
(73) Patentinhaber: MAHLE Behr GmbH & Co. KG, 70469 Stuttgart (DE)
(72) Erfinder: Heckenberger, Thomas, 5837 Fentange (LU); Isermeyer, Tobias, 74245 Löwenstein (DE); Eckstein, Jürgen, 71409 Schwaikheim (DE); Steinbach, Martin, 71336 Waiblingen (DE); Fehrenbacher, Christoph, 70597 Stuttgart (DE); Moser, Michael, 73479 Ellwangen (DE)
(74) Vertreter: Grauel, Andreas

(56) Entgegenhaltungen:
- WO-A1-2005/071774
- DE-A1- 19 513 774
- DE-A1-102007 037 416

## Beschreibung

Die vorliegende Erfindung bezieht sich auf ein Verfahren zum Aufbau einer elektrochemischen Energiespeichereinheit und eine elektrochemische Energiespeichereinheit, die beispielsweise bei einem Fahrzeug eingesetzt werden kann.

Der Stand der Technik wird in den Dokumenten DE 10 2007 037416 und DE 195 13 774 dargestellt. Bei einem herkömmlichen Aufbau eines Verbundes aus Batteriezellen wird der Verbund zuerst komplett aufgebaut und anschließend wird eine Kontaktierung der Ableiter der Batteriezellen durchgeführt. Um eine Zugänglichkeit für die Verbindungstechnik zu gewährleisten, ist es notwendig, dass sich die Ableiter oder ggf. weitere Bauteile wie Zellverbinder überlappen. Somit ist keine ebene Anlagefläche vorhanden und die Wärmeübertragung an die Wärmesenke ist nur eingeschränkt möglich. Batteriezellen sind sehr empfindlich gegenüber Belastungen durch Temperatur und mechanische Fügeprozesse (z.B. Vibrationen), so dass bereits im Herstellungsprozess eines Energiespeichers eine dauerhafte Schädigung der Zellen auftreten kann. Durch den Wärmeeintrag bei der Anwendung von stoffschlüssigen Verbindungsverfahren, wie z.B. Schweißen, insbesondere Laserschweißen, kann eine Siegelnaht am Ableiter, aber auch die Zelle selbst geschädigt werden. Die beim Ultraschallschweißen auftretenden Vibrationen können ebenfalls die Siegelnaht am Ableiter und auch den inneren Aufbau der Zelle wie eine Elektrodenkontaktierung irreversibel schädigen. Mechanische Verbindungsverfahren wie Schrauben oder Klemmen verursachen inakzeptable Übergangswiderstände bzw. sind nicht für die geforderte Lebensdauer (>10 Jahre) geeignet.

Es ist die Aufgabe der vorliegenden Erfindung ein verbessertes Verfahren zum Aufbau einer elektrochemischen Energiespeichereinheit sowie eine verbesserte elektrochemische Energiespeichereinheit zu schaffen.

Diese Aufgabe wird durch ein Verfahren zum Aufbau einer elektrochemischen Energiespeichereinheit sowie eine elektrochemische Energiespeichereinheit gemäß den Hauptansprüchen gelöst.

Der vorliegenden Erfindung liegt die Erkenntnis zugrunde, dass ein Kaltumformverfahren zwei Materialien unterschiedlichen Charakters dauerhaft und sicher verbinden kann, ohne deren Materialeigenschaften nennenswert zu beeinflussen. Zusätzlich kann durch einen intensiven Kontakt auf atomarer oder kristalliner Ebene zwischen den Materialien eine gute elektrische Leitfähigkeit der Verbindung erreicht werden. Das Kaltumformverfahren ermöglicht eine Verbindung ohne weitere mechanische Belastungen, außer einer Belastung in einer Arbeitsrichtung des Kaltumformverfahrens, die durch ein notwendiges Werkzeug abgestützt wird. Ebenso erzeugt das Kaltumformverfahren nur begrenzt Wärme in geringer Menge, so dass eine Umgebung einer Fügestelle nicht oder nur minimal erwärmt wird. Da für das Kaltumformverfahren ein Stempel und eine Matrize und eine entsprechende Zugänglichkeit der Verbindungsstelle erforderlich sind und gleichzeitig eine ebene Anlagefläche für eine Ableiterkühlung dargestellt werden soll, können die bisher bekannten Verfahren zum Aufbau des Zellverbunds nicht eingesetzt werden. Für eine Anbindung an eine Wärmesenke, z.B. eine fluiddurchströmte Kühlplatte, benötigt der Verbund aus Einzelzellen eine ebene und mechanisch stabile Anlagefläche. Dies ist insbesondere erforderlich, wenn die Abfuhr der Verlustwärme über die Ableiter erfolgt. Um eine ebene Anlagefläche für eine Wärmesenke zu erhalten, wird die Verbindungsfläche von der Anlagefläche separiert, d.h. die Verbindungsstellen und die Anlagefläche werden in unterschiedlichen Ebenen dargestellt, die insbesondere rechtwinklig zueinander liegen. Um dies zu ermöglichen werden abgewinkelte, insbesondere U- oder L-förmige Zellverbinder eingesetzt. Die Zugänglichkeit für das Verbindungsverfahren wird durch spezielle auf das Verbindungsverfahren abgestimmte Aussparungen und Durchbrüche in Rahmen und Zellverbinder erreicht. Weiterhin kann die benötigte Zugänglichkeit für die vorgeschlagene Verbindungstechnik durch die Einführung eines neuen sequentiellen, d.h. schrittweisen Verfahrens, für Aufbau und Kontaktierung des Zellverbundes erreicht werden.

Vorteilhafterweise kann durch eine Kontaktierung von Batteriezellen mittels eines Kaltumformverfahrens ein kaltes, vibrationsfreies Verbindungsverfahren zur Herstellung einer kraft- und formschlüssigen Verbindung angewandt werden. Dadurch kann eine Schädigung der Batteriezellen durch das Verbindungsverfahren verhindert werden. Zusätzlich kann durch eine Verlegung der Verbindungsstellen in eine Ebene außerhalb der Anlagefläche der Wärmesenke eine ebene Anlagefläche für eine Ableiterkühlung geschaffen werden. Durch einen schrittweisen Aufbau des Zellverbundes kann eine Zugänglichkeit für den Verbindungsprozess besonders einfach geschaffen werden.

Somit basiert die vorliegende Erfindung auf der Anwendung eines zu bisherigen Vorgehensweisen alternativen Verbindungsverfahrens zum Aufbau eines Zellverbundes. Dazu wird ein für eine Batteriezelle belastungsfreies Verbindungsverfahren ohne Wärmeeintrag und ohne mechanische Belastung verwendet. Vorteilhafterweise kann der elektrische Übergangswiderstand der mit dem Verbindungsverfahren hergestellten Verbindung ähnlich vorteilhaft sein, wie der Übergangswiderstand bei stoffschlüssigen Verbindungen ist. Da die Ableiter, einer Zelle typischerweise aus unterschiedlichen Werkstoffen bestehen, z.B. Kupfer vernickelt und Aluminium, kommen nur Verfahren in Frage die für diese Materialkombination geeignet sind. Daher wird das Durchsetzfüge-Verfahren angewendet. Durchsetzfügen bzw. Clinchen/Toxen ist ein umformtechnisches Fügen von Werkstoffen. Durch einen Stempel werden zwei übereinanderliegende Bauteile zusammen kaltverformt. Durch den Materialfluss in den Bauteilen erfolgt eine kraft- und formschlüssige Verbindung. Die Verbindung erfolgt ohne Wärmeeinbringung und besitzt einen kleinen elektrischen Übergangswiderstand.

Die vorliegende Erfindung schafft ein Verfahren zum Aufbau einer elektrochemischen Energiespeichereinheit, mit folgenden Schritten:
Bereitstellen einer Batteriezelle, die einen Batteriekörper und zumindest einen ersten Ableiter und zumindest einen zweiten Ableiter aufweist, wobei der erste Ableiter und der zweite Ableiter über eine Außenkontur des Batteriekörpers hinausragen;
Bereitstellen eines Zellverbinders, der zumindest eine erste Kontaktfläche und eine zweite Kontaktfläche aufweist, wobei die erste Kontaktfläche und die zweite Kontaktfläche in einen Winkel zueinander angeordnet sind, und wobei der Zellverbinder zumindest einen Durchbruch in der zweiten Kontaktfläche aufweist;
Bereitstellens eines Rahmens, der zumindest eine Öffnung, und zumindest eine Auflagefläche aufweist, wobei die Auflagefläche zumindest zwei Aussparungen aufweist;
Zusammenführens des Rahmens und des Zellverbinders, wobei die erste Kontaktfläche auf der Auflagefläche angeordnet wird, und wobei zumindest eine der Aussparungen an dem Durchbruch ausgerichtet wird, um eine Stapeleinheit zu erhalten;
Einlegens der Batteriezelle in die Stapeleinheit, wobei der Batteriekörper in der Öffnung angeordnet wird und der erste Ableiter auf der ersten Kontaktfläche angeordnet wird, um eine Batterie-Stapeleinheit zu erhalten; und
Verbinden der Batteriezelle mit dem Zellverbinder mittels eines Kaltumformverfahrens, bei dem der erste Ableiter mit der ersten Kontaktfläche verbunden wird, um eine erste Stapelzelle zu erhalten.

Unter einer Batteriezelle kann ein Akkumulator verstanden werden. Die Batteriezelle kann elektrische Energie aufnehmen und in einem elektrochemischen Prozess speichern, sowie durch eine Umkehr des elektrochemischen Prozesses elektrische Energie erzeugen und bereitstellen. Die Batteriezelle kann einen in Aluminiumverbundfolie verpackten Batteriekörper aufweisen, aus dem ein erster Ableiter und ein zweiter Ableiter aus einem wärmeleitenden und stromleitenden Plattenmaterial als elektrische Kontaktmittel und als thermische Kontaktmittel herausragen. Der erste Ableiter und der zweite Ableiter können in einer Haupterstreckungsebene des Batteriekörpers angeordnet sein. Unter einem Zellverbinder kann ein elektrisch leitendes und wärmeleitendes Bauteil zum Verbinden von zumindest zwei Ableitern verstanden werden. Der Zellverbinder kann ein Stanzbiegeteil aus metallischem Plattenmaterial sein. Der Zellverbinder kann zumindest einen Durchbruch in einer zweiten Kontaktfläche aufweisen, wobei eine Breite der zweiten Kontaktfläche einer Dicke des Rahmens entsprechen kann. Der Durchbruch des Zellverbinders kann ausgebildet sein, um eine Durchgangsöffnung für eine Matrize und/oder einen Stempel in einen Zwischenraum zwischen einer ersten Kontaktfläche und einer dritten Kontaktfläche des Zellverbinders zu sein. Unter einem Rahmen kann ein tragendes Bauteil verstanden werden. Der Rahmen kann eine Öffnung aufweisen, wobei lichte Maße der Öffnung zum Aufnehmen des Batteriekörpers Außenmaßen des Batteriekörpers entsprechen können. Der Rahmen kann Aussparungen aufweisen, in die der Stempel oder die Matrize eingebracht werden können, um den Zellverbinder mit den Ableitern zu verbinden. Die Aussparungen im Rahmen können in gegenüberliegenden Seiten des Rahmens angeordnet sein. Die Aussparungen können von einer ersten Auflagefläche zum Auflegen der ersten Kontaktfläche bis zu einer zweiten Auflagefläche reichen. Bei einem Zusammenführen des Rahmens und des Zellverbinders kann der Zellverbinder mit Rastmitteln in entsprechende Rastmittel des Rahmens eingerastet werden. Dabei kann der Rahmen von den Kontaktflächen des Zellverbinders umschlossen werden, so dass eine Position eines Durchbruchs im Zellverbinder mit einer Position einer Aussparung im Rahmen übereinstimmt. Bei einem Verbinden eines Ableiters der Batteriezelle mit einer Kontaktfläche des Zellverbinders kann ein Kaltumformverfahren, wie Clinchen oder Toxen angewandt werden. Eine Stapelzelle kann ein kleinstmöglicher Baustein für die Energiespeichereinheit sein.

Entsprechend einer weiteren Ausführungsform der vorliegenden Erfindung kann im Schritt des Bereitstellens des Zellverbinders der Zellverbinder eine dritte Kontaktfläche aufweisen, die in einem Winkel zur zweiten Kontaktfläche an einer der ersten Kontaktfläche gegenüberliegenden Kante der zweiten Kontaktfläche angeordnet ist. Ferner kann das Verfahren ein Wiederholen der Schritte zum Aufbau einer elektrochemischen Energiespeichereinheit umfassen, um eine weitere Stapelzelle zu erhalten. In einem Schritt des Anordnens kann die erste Stapelzelle und die weitere Stapelzelle, so angeordnet werden, dass der Zellverbinder der weiteren Stapelzelle an einer dem Zellverbinder der ersten Stapelzelle gegenüberliegenden Seite des Rahmens der ersten Stapelzelle ausgerichtet wird und der zweite Ableiter der weiteren Stapelzelle auf der dritten Kontaktfläche des Zellverbinders der ersten Stapelzelle angeordnet wird. In einem Schritt des Verbindens kann die Batteriezelle der weiteren Stapelzelle mit dem Zellverbinder der ersten Stapelzelle mittels eines Kaltumformverfahrens verbunden werden. Dabei kann der zweite Ableiter der weiteren Stapelzelle mit der dritten Kontaktfläche der ersten Stapelzelle verbunden werden, um eine erste Einheit zu erhalten.

Bei der ersten Stapelzelle kann der Zellverbinder an einer ersten Seite des Rahmens angeordnet sein. Eine zweite, der ersten Seite gegenüberliegende Seite des Rahmens kann dann zellverbinderlos sein. Um eine weitere Stapelzelle auf die erste Stapelzelle aufzusetzen, kann ein Zellverbinder der weiteren Stapelzelle an der zweiten Seite eines Rahmens der weiteren Stapelzelle befestigt werden. Die Batteriezelle der ersten Stapelzelle kann an dem ersten Ableiter mit dem Zellverbinder der ersten Stapelzelle verbunden werden. Eine Batteriezelle der weiteren Stapelzelle kann an einem ersten Ableiter mit dem Zellverbinder der weiteren Stapelzelle verbunden sein. Ein zweiter Ableiter der Batteriezelle der weiteren Stapelzelle kann mit dem Zellverbinder der ersten Stapelzelle verbunden sein. Der erste Ableiter kann ein Pluspol der Batteriezelle sein und der zweite Ableiter kann ein Minuspol der Batteriezelle sein, oder umgekehrt. In einer Einheit können die Batteriezelle der ersten Stapelzelle und die Batteriezelle der zweiten Stapeleinheit in einer Reihenschaltung oder einer Parallelschaltung angeordnet sein.

Gemäß einer weiteren Ausführungsform der vorliegenden Erfindung können die Schritte zum Aufbau einer elektrochemischen Energiespeichereinheit wiederholt werden, um eine weitere Einheit zu erhalten. Ferner kann das Verfahren einen Schritt des Anordnens der weiteren Einheit umfassen, so dass eine dritte Kontaktfläche der weiteren Stapelzelle der weiteren Einheit an dem zweiten Ableiter der ersten Stapelzelle der ersten Einheit angeordnet wird. In einem Schritt des Verbindens kann die Batteriezelle der ersten Stapelzelle der ersten Einheit mit dem Zellverbinder der weiteren Stapelzelle der weiteren Einheit mittels eines Kaltumformverfahrens verbunden werden. Bei dem Kaltumformverfahren kann der zweite Ableiter der Batteriezelle der ersten Stapelzelle der ersten Einheit mit der dritten Kontaktfläche des Zellverbinders der weiteren Stapelzelle der weiteren Einheit verbunden werden.

Um zwei Einheiten aufeinander zu stapeln kann ein unkontaktierter Ableiter einer außenliegenden Batteriezelle einer ersten Einheit mit einer unkontaktierten Kontaktfläche eines Zellverbinders einer zweiten Einheit kontaktiert werden. Dieser Vorgang mit weiteren Einheiten kann wiederholt werden.

Die Schritte des Verbindens können jeweils als Durchsetzfügeverfahren ausgeführt werden. Dadurch kann eine Einbringung von Wärmeenergie durch den Fügeprozess vermieden werden und dennoch eine unmittelbare Kontaktierung des Ableiters mit dem Zellverbinder erreicht werden.

Ferner kann im Schritt des Verbindens einer der Ableiter und einer der Zellverbinder zwischen einem Stempel eines Werkzeugs und einer Matrize des Werkzeugs positioniert werden und anschließend kann der Ableiter durch den Zellverbinder oder der Zellverbinder durch den Ableiter durchgesetzt werden. Der Stempel kann einen Vorsprung aufweisen. Die Matrize kann eine entsprechende Kavität aufweisen. Der Stempel kann Material aus dem Ableiter und dem Zellverbinder in die Kavität der Matrize pressen, wenn der Stempel axial auf die Kavität der Matrize zubewegt wird. Dadurch können der Ableiter und der Zellverbinder sicher, elektrisch leitend und wärmeleitend miteinander verbinden.

Dabei kann das Werkzeug eine Zange sein. Dadurch kann die Verbindung durchgeführt werden, wenn eine Erreichbarkeit der Matrize senkrecht zu der Kavität nicht gegeben ist.

Gemäß einer weiteren Ausführungsform der vorliegenden Erfindung umfasst das Verfahren weiterhin einen Schritt des Bereitstellen einer Wärmesenke, die eine ebene Wärmeübergangsfläche aufweist. In einem Schritt des Verbindens kann die Wärmesenke mit der elektrochemischen Energiespeichereinheit verbunden werden, wobei die Wärmeübergangsfläche mit zumindest einer zweiten Kontaktfläche eines Zellverbinders verbunden wird. Durch eine Verbindung von Ableiter und Zellverbinder in einer Ebene außerhalb einer Ebene der zweiten Kontaktfläche des Zellverbinders ergibt sich eine ebene Anlagefläche für die Wärmesenke zur Wärmeabfuhr von der oder zur Wärmezufuhr an die Batteriezelle. Die Wärmeübertragung kann dabei über die Ableiter erfolgen. Dadurch kann die Wärmesenke besonders einfach gestaltet werden.

Weiterhin umfasst die Erfindung auch eine Elektrochemische Energiespeichereinheit mit zumindest einer Stapelzelle, mit folgenden Merkmalen:
einer Batteriezelle, die einen Batteriekörper und zumindest einen ersten Ableiter und zumindest einen zweiten Ableiter aufweist, wobei der erste Ableiter und der zweite Ableiter über eine Außenkontur des Batteriekörpers hinausragen;
einem Zellverbinder, der zumindest eine erste Kontaktfläche und eine zweite Kontaktfläche aufweist, wobei die erste Kontaktfläche und die zweite Kontaktfläche in einen Winkel zueinander angeordnet sind, und wobei der Zellverbinder zumindest einen Durchbruch in der zweiten Kontaktfläche aufweist, wobei der erste Ableiter auf der ersten Kontaktfläche angeordnet ist und der erste Ableiter mittels eines Kaltumformverfahrens mit der ersten Kontaktfläche verbunden ist; und
einem Rahmen, der zumindest eine Öffnung und zumindest eine Auflagefläche aufweist, wobei die Auflagefläche zumindest zwei Aussparungen aufweist, wobei der Batteriekörper in der Öffnung angeordnet ist und wobei die erste Kontaktfläche auf der Auflagefläche angeordnet ist, und wobei zumindest eine der Aussparungen an dem Durchbruch ausgerichtet ist.

Gemäß einer weiteren Ausführungsform der vorliegenden Erfindung umfasst die Elektrochemische Energiespeichereinheit eine weitere Stapelzelle, wobei eine Batteriezelle der weiteren Stapelzelle mit dem Zellverbinder der ersten Stapelzelle mittels eines Kaltumformverfahrens verbunden ist, und ein zweiter Ableiter der weiteren Stapelzelle mit der dritten Kontaktfläche der ersten Stapelzelle verbunden ist.

Ferner kann auch der Rahmen zwei einander gegenüberliegende Rahmenelemente und zwei einander gegenüberliegende Verbindungselemente aufweisen, die zwischen den Rahmenelementen angeordnet sind, wobei die zwei Rahmenelemente jeweils eine Auflagefläche und an einem der Öffnung gegenüberliegenden Rand zwei Einbuchtungen zum Bilden der zwei Aussparungen aufweisen. Ein Rahmenelement und ein Verbindungselement können Teile eines umlaufenden Randes des Rahmens sein. Die Rahmenelemente und Verbindungselemente können die Öffnung für den Batteriekörper umschließen.

Vorteilhafte Ausführungsbeispiele der vorliegenden Erfindung werden nachfolgend Bezug nehmend auf die beiliegenden Zeichnungen näher erläutert. Es zeigen:
- Figuren 1a bis 1d: Darstellungen zweier Ausführungsbeispiele von Batteriezellen;
- Fig. 2: eine Darstellung eines Rahmens gemäß einem Ausführungsbeispiel der vorliegenden Erfindung;
- Fig. 3: eine Darstellung eines Zellverbinders gemäß einem Ausführungsbeispiel der vorliegenden Erfindung;
- Fig. 4: eine Darstellung einer elektrochemischen Energiespeichereinheit als Stapelzelle gemäß einem Ausführungsbeispiel der vorliegenden Erfindung;
- Fig. 5: eine Darstellung einer elektrochemischen Energiespeichereinheit als Einheit von Stapelzellen gemäß einem Ausführungsbeispiel der vorliegenden Erfindung;
- Fig. 6: eine Darstellung einer elektrochemischen Energiespeichereinheit mit zwei Einheiten gemäß einem Ausführungsbeispiel der vorliegenden Erfindung;
- Fig. 7: eine Darstellung einer elektrochemischen Energiespeichereinheit mit einer Wärmesenke gemäß einem Ausführungsbeispiel der vorliegenden Erfindung; und
- Fig. 8: ein Ablaufdiagramm eines Verfahrens zum Aufbau einer elektrochemischen Energiespeichereinheit gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

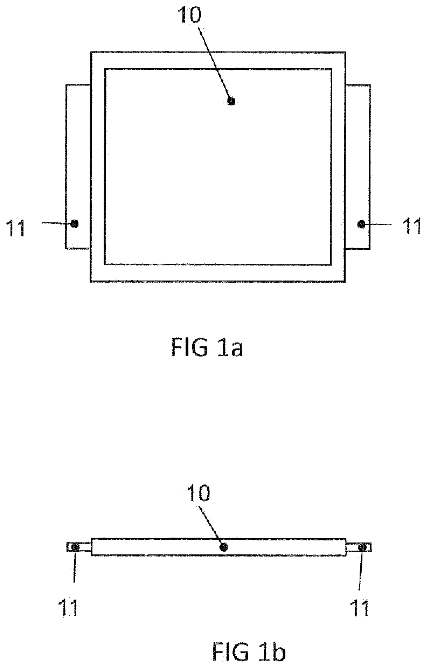

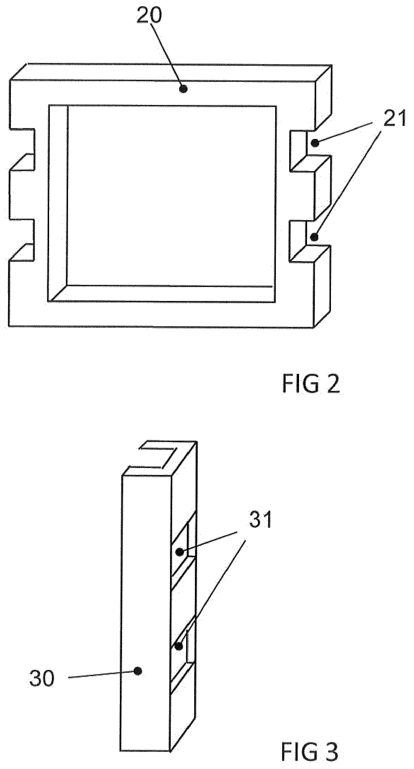

Die Figuren 1a bis 1d zeigen Ausführungsbeispiele die auf typischen Energiespeicher basieren, die beispielsweise in Aluminiumverbundfolie verpackt sind. Dabei kann es sich beispielsweise um Lithium-lonen oder Lithium-Polymer Zellen mit Ableiterkühlung handeln. Sogenannte "coffee-bag" oder "pouch" Batteriezellen weisen Ableiter auf. Die Ableiter können entweder an einer Seite oder an gegenüberliegenden Seiten der Batteriezelle liegen. In den Figuren 2 bis 7 ist ein Ausführungsbeispiel für eine Zelle mit Ableitern an gegenüberliegenden Seiten der Zelle dargestellt. Elektrochemische Energiespeichereinheiten für elektrische oder hybride Antriebsstränge werden aus einer Vielzahl von Batteriezellen aufgebaut. Die Batteriezellen, werden durch Sekundärmaßnahmen im Verbau mechanisch stabilisiert. Die Ableiter der Batteriezellen werden zur Herstellung einer Serien- und/oder Parallelschaltung miteinander kontaktiert. Dabei soll der Übergangswiderstand möglichst gering sein.

Fig. 1a zeigt eine Draufsicht auf eine Batteriezelle 10 gemäß einem Ausführungsbeispiel der vorliegenden Erfindung. Auf gegenüberliegenden Seiten eines Batteriekörpers ragen ein erster Ableiter 11 und ein zweiter Ableiter 11 aus dem Batteriekörper heraus. Der Batteriekörper weist eine rechteckige plattenförmige Form auf. Umlaufend um den Batteriekörper weist die Batteriezelle 10 einen Überstand von Folie auf.

Fig. 1b zeigt die Batteriezelle aus Fig. 1a in einer Seitenansicht. Die Ableiter 11 stehen in einer Ebene mit der Batteriezelle 10 aus dem Batteriekörper heraus.

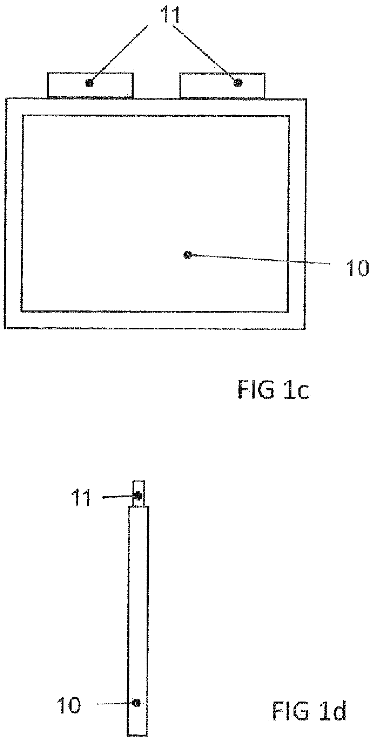

Fig. 1c zeigt eine Draufsicht auf eine Batteriezelle 10 gemäß einem weiteren Ausführungsbeispiel der vorliegenden Erfindung. Wie in Fig. 1a weist die Batteriezelle 10 zwei Ableiter 11 auf. Beide Ableiter 11 stehen auf einer Seite des Batteriekörpers über.

Fig. 1d zeigt die Batteriezelle aus Fig. 1c in einer Seitenansicht. Die Ableiter 11 stehen in einer Ebene mit der Batteriezelle 10 aus dem Batteriekörper heraus.

Fig. 2 zeigt eine perspektivische Ansicht eines Rahmens 20 gemäß einem Ausführungsbeispiel der vorliegenden Erfindung. Der Rahmen 20 ist typischerweise ein Kunststoffrahmen, der die Batteriezellen 10 im Verbund mechanisch stabilisiert. Der Rahmen 20 besitzt Aussparungen 21, um die Zugänglichkeit für die Verbindungstechnik zu gewährleisten. Der Rahmen 20 weist einen quaderförmigen Grundkörper mit zwei gegenüberliegenden Grundflächen auf. Eine von einer ersten der Grundflächen zu der gegenüberliegenden Grundflächen reichende Durchgangsöffnung ist mittig in einer Oberfläche der Grundflächen angeordnet. Die Durchgangsöffnung weist Maße auf, die Maßen des Batteriekörpers entsprechen, und ist dazu geeignet, den Batteriekörper aufzunehmen. Der Grundkörper weist an zwei gegenüberliegenden Schmalseiten je zwei symmetrisch zu einer Längsachse des Grundkörpers angeordnete Aussparungen 21 auf. Die Aussparungen 21 reichen durch den Grundkörper von der ersten Grundfläche bis zu der gegenüberliegenden Grundfläche.

Fig. 3 zeigt eine perspektivische Ansicht eines Zellverbinders 30 gemäß einem Ausführungsbeispiel der vorliegenden Erfindung. Der insbesondere U- oder L-förmige Zellverbinder 30 wird auf den Rahmen montiert und befestigt, z.B. durch Clipsen. Der Zellverbinder weist Durchbrüche 31 auf, um die Zugänglichkeit für die Verbindungstechnik zu gewährleisten. Die Batteriezellen werden mittels des Zellverbinders 30 elektrisch verbunden. Der Zellverbinder 30 weist eine erste Kontaktfläche, eine zweite Kontaktfläche mit zwei Durchbrüchen und eine dritte Kontaktfläche auf. Die erste Kontaktfläche und die zweite Kontaktfläche stehen senkrecht aufeinander. Die zweite Kontaktfläche und die dritte Kontaktfläche stehen senkrecht aufeinander. Die Durchbrüche 31 sind so angeordnet, dass sie die Aussparungen im Rahmen abbilden.

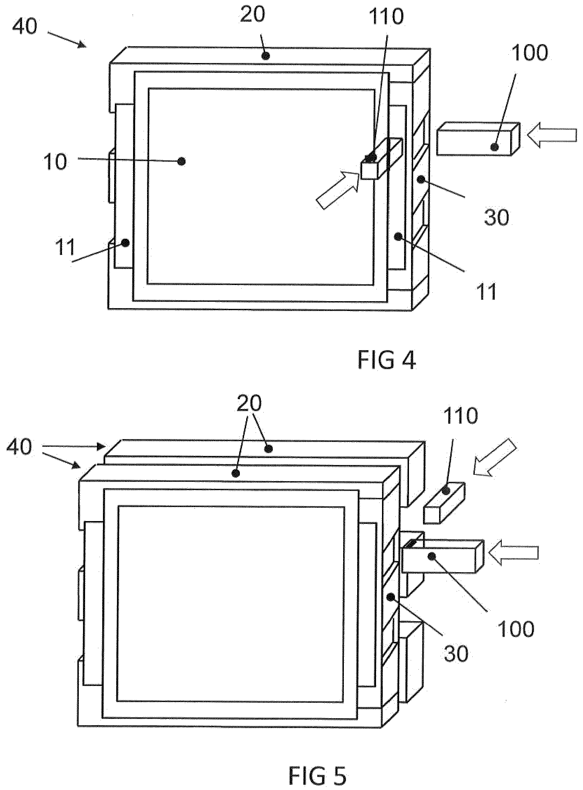

Fig. 4 zeigt eine räumliche Darstellung einer Stapelzelle 40 gemäß einem Ausführungsbeispiel der vorliegenden Erfindung. Die Stapelzelle 40 ist ein erster Schritt zu einem Aufbau eines Zellverbundes. Um die Stapelzelle 40 herzustellen, wurde die Batteriezelle 10 in den Rahmen 20 eingelegt. Der Zellverbinder 30 war bereits auf dem Rahmen 20 montiert, so dass der Ableiter 11 auf der Kontaktfläche des Zellverbinders aufliegt. Die Verbindung von Ableiter 11 und Zellverbinder 30 erfolgt mittels Durchsetzfügen als kalter Verbindungsprozess durch ein Zusammenfahren von einem Stempel 110 und einer Matrize 100. Die Matrize 100 tritt dabei durch die Durchbrüche des Zellverbinders 30 in die Aussparungen des Rahmens 20 ein.

Fig. 5 zeigt eine räumliche Darstellung einer Einheit von zwei Stapelzellen 40 gemäß einem Ausführungsbeispiel der vorliegenden Erfindung. Eine zweite bereits kontaktierte Zelle-Rahmen-Zellverbinder-Einheit 40 wird, um 180° um die Mittelachse gedreht, auf die erste Stapelzelle 40 gestapelt. Der noch freie Ableiter der zweiten Stapelzelle 40 wird mit dem Zellverbinder 30 der ersten Einheit verbunden. Stempel 110 und Matrize 100 treten dabei in die Durchbrüche und Aussparungen ein, damit ist die Zugänglichkeit für die Verbindungstechnik möglich. Bei der zweiten Stapelzelle 40 ist der Zellverbinder 30, in Bezug zu der ersten Stapelzelle 40, auf einer gegenüberliegenden Schmalseite des Rahmens 20 angeordnet.

Die zweite Stapelzelle 40 weist eine weitere Batteriezelle, einen weiteren Zellverbinder, und einen weiteren Rahmen 20 auf. Die weitere Batteriezelle weist einen weiteren Batteriekörper und zumindest einen weiteren ersten Ableiter, sowie zumindest einen weiteren zweiten Ableiter auf. Dabei ragen der erste weitere Ableiter und der zweite weitere Ableiter über eine Außenkontur des Batteriekörpers hinaus. Der weitere Zellverbinder weist eine weitere erste Kontaktfläche, eine weitere zweite Kontaktfläche und eine weitere dritte Kontaktfläche auf. Die weitere erste Kontaktfläche und die weitere zweite Kontaktfläche sowie die weitere zweite Kontaktfläche und die weitere dritte Kontaktfläche sind jeweils in einem Winkel zueinander angeordnet. Der weitere Zellverbinder weist zumindest einen weiteren Durchbruch in der weiteren zweiten Kontaktfläche auf. Der weitere erste Ableiter ist auf der weiteren ersten Kontaktfläche angeordnet und der weitere erste Ableiter ist mittels eines Kaltumformverfahrens mit der weiteren ersten Kontaktfläche verbunden. Der weitere Rahmen 20 weist zumindest eine weitere Durchgangsöffnung, und zumindest eine weitere Auflagefläche auf. Die weitere Auflagefläche weist zumindest zwei weitere Aussparungen auf. Der weitere Batteriekörper ist in der weiteren Durchgangsöffnung angeordnet und die weitere erste Kontaktfläche ist auf der weiteren Auflagefläche angeordnet. Zumindest eine der weiteren Aussparungen ist an dem weiteren Durchbruch ausgerichtet.

Die weitere Stapelzelle 40 wird so angeordnet, dass der weitere Zellverbinder an einer dem Zellverbinder 30 gegenüberliegenden Seite des Rahmens 20 ausgerichtet ist, und der weitere zweite Ableiter auf der dritten Kontaktfläche des Zellverbinders 30 angeordnet ist. Der weitere zweite Ableiter wird mit der dritten Kontaktfläche verbunden, um eine Einheit aus Stapelzellen 40 zu erhalten.

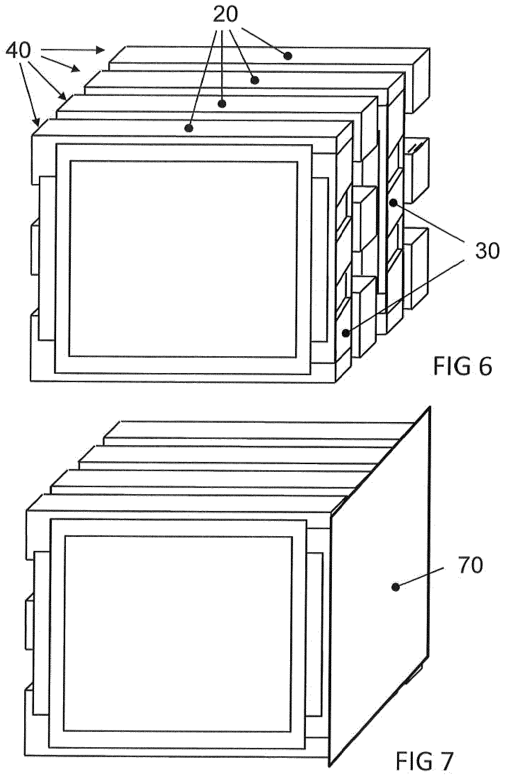

Fig. 6 zeigt eine räumliche Darstellung einer elektrochemischen Energiespeichereinheit gemäß einem Ausführungsbeispiel der vorliegenden Erfindung. Für einen weiteren Aufbau des Zellverbundes werden weitere Zelleinheiten 40 auf den bestehenden Verbund gestapelt. Die Kontaktierung wird wie oben beschrieben hergestellt. Anstatt Stempel und Matrize kann für die Verbindungstechnik auch eine Zange verwendet werden. Die Zellverbinder 30, die fest auf den Rahmen 20 aufliegen und sich daher nicht verformen können, bilden an einer oder zwei Seiten des Zellverbunds eine ebene Anlagefläche für eine Wärmesenke.

Fig. 7 zeigt die elektrochemische Energiespeichereinheit aus Fig. 6. Auf der ebenen Anlagefläche, die durch die Zellverbinder gebildet wird, ist eine Wärmesenke 70 angeordnet. Die Wärmesenke 70 kann die elektrochemische Energiespeichereinheit temperieren. Verlustwärme kann aus den Batteriezellen durch die Ableiter in die Zellverbinder fließen und dort von der Wärmesenke 70 abgeführt werden.

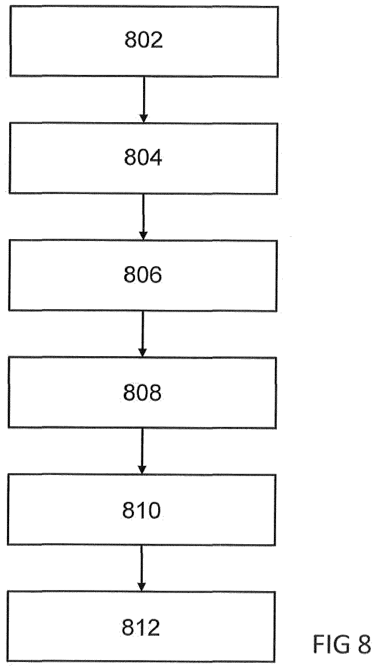

Fig. 8 zeigt ein Ablaufdiagramm eines Verfahrens zum Aufbau einer elektrochemischen Energiespeichereinheit gemäß einem Ausführungsbeispiel der vorliegenden Erfindung. Das Verfahren weist einen Schritt 802 des Bereitstellens einer Batteriezelle, einen Schritt 804 des Bereitstellens eines Zellverbinders, einen Schritt 806 des Bereitstellens eines Rahmens, einen Schritt 808 des Zusammenführens des Rahmens und des Zellverbinders, einen Schritt 810 des Einlegens der Batteriezelle, und einen Schritt 812 des Verbindens auf. Im Schritt 802 des Bereitstellens einer Batteriezelle wird eine Batteriezelle bereitgestellt, die einen Batteriekörper und zumindest einen ersten Ableiter und zumindest einen zweiten Ableiter aufweist. Der erste Ableiter und der zweite Ableiter ragen über eine Außenkontur des Batteriekörpers hinaus. Im Schritt 804 des Bereitstellens eines Zellverbinders wird ein Zellverbinder bereitgestellt, der zumindest eine erste Kontaktfläche und eine zweite Kontaktfläche aufweist. Die erste Kontaktfläche und die zweite Kontaktfläche sind in einem Winkel zueinander angeordnet. Der Zellverbinder weist zumindest einen Durchbruch in der zweiten Kontaktfläche auf. Im Schritt 806 des Bereitstellens eines Rahmens wird ein Rahmen bereitgestellt, der zumindest eine Öffnung, und zumindest eine Auflagefläche aufweist. Die Auflagefläche weist zumindest zwei Aussparungen auf. Im Schritt 808 des Zusammenführens des Rahmens und des Zellverbinders wird der Rahmen mit dem Zellverbinder zusammengeführt. Die erste Kontaktfläche wird auf der Auflagefläche angeordnet, und zumindest eine der Aussparungen an dem Durchbruch ausgerichtet, um eine Stapeleinheit zu erhalten. Im Schritt 810 des Einlegens der Batteriezelle in die Stapeleinheit wird die Batteriezelle in die Stapeleinheit eingelegt. Der Batteriekörper wird in der Öffnung angeordnet und der erste Ableiter wird auf der ersten Kontaktfläche angeordnet, um eine Batterie-Stapeleinheit zu erhalten. Im Schritt 812 wird die Batteriezelle mit dem Zellverbinder mittels eines Kaltumformverfahrens verbunden. Der erste Ableiter wird mit der ersten Kontaktfläche verbunden. Durch das Durchführen der Schritte 802, 804, 806, 808, 810, 812 wird eine erste Stapelzelle hergestellt. Weitere Stapelzellen können entsprechend hergestellt und mit bereits bestehenden Stapelzellen verbunden werden.

Die beschriebenen Ausführungsbeispiele sind nur beispielhaft gewählt und können miteinander kombiniert werden.

## Patentansprüche

1. Verfahren zum Aufbau einer elektrochemischen Energiespeichereinheit, mit folgenden Schritten:
Bereitstellen (802) einer Batteriezelle (10), die einen Batteriekörper und zumindest einen ersten Ableiter (11) und zumindest einen zweiten Ableiter (11) aufweist, wobei der erste Ableiter und der zweite Ableiter über eine Außenkontur des Batteriekörpers hinausragen;
Bereitstellen (804) eines Zellverbinders (30), der zumindest eine erste Kontaktfläche und eine zweite Kontaktfläche aufweist, wobei die erste Kontaktfläche und die zweite Kontaktfläche in einen Winkel zueinander angeordnet sind, und wobei der Zellverbinder zumindest einen Durchbruch (31) in der zweiten Kontaktfläche aufweist;
Bereitstellen (806) eines Rahmens (20), der zumindest eine Öffnung, und zumindest eine Auflagefläche aufweist, wobei die Auflagefläche zumindest zwei Einbuchtungen (21) aufweist;
Zusammenführen (808) des Rahmens (20) und des Zellverbinders (30), wobei die erste Kontaktfläche auf der Auflagefläche angeordnet wird, und wobei zumindest eine der Einbuchtungen (21) an dem Durchbruch (31) ausgerichtet wird, um eine Stapeleinheit zu erhalten;
Einlegen (810) der Batteriezelle (10) in die Stapeleinheit, wobei der Batteriekörper in der Öffnung angeordnet wird und der erste Ableiter (11) auf der ersten Kontaktfläche angeordnet wird, um eine Batterie-Stapeleinheit zu erhalten; und
Verbinden (812) der Batteriezelle (10) mit dem Zellverbinder (30) mittels eines Kaltumformverfahrens, bei dem der erste Ableiter (11) mit der ersten Kontaktfläche verbunden wird, um eine erste Stapelzellen (40) zu erhalten.

2. Verfahren gemäß Anspruch 1, wobei im Schritt (804) des Bereitstellens des Zellverbinders der Zellverbinder (30) eine dritte Kontaktfläche aufweist, die in einem Winkel zur zweiten Kontaktfläche an einer der ersten Kontaktfläche gegenüberliegenden Kante der zweiten Kontaktfläche angeordnet ist, und mit einem Wiederholen der Schritte (802, 804, 806, 808, 810, 812) zum Aufbau einer elektrochemischen Energiespeichereinheit um eine weitere Stapelzelle (40) zu erhalten, und mit einem Schritt des Anordnens der ersten Stapelzelle (40) und der weiteren Stapelzelle, so dass der Zellverbinder der weiteren Stapelzelle an einer dem Zellverbinder der ersten Stapelzelle gegenüberliegenden Seite des Rahmens (20) der ersten Stapelzelle ausgerichtet wird, und der zweite Ableiter der weiteren Stapelzelle auf der dritten Kontaktfläche des Zellverbinders der ersten Stapelzelle angeordnet wird, und mit einem Schritt des Verbindens der Batteriezelle der weiteren Stapelzelle mit dem Zellverbinder der ersten Stapelzelle mittels eines Kaltumformverfahrens, bei dem der zweite Ableiter (11) der weiteren Stapelzelle mit der dritten Kontaktfläche der ersten Stapelzelle verbunden wird, um eine erste Einheit zu erhalten.

3. Verfahren gemäß Anspruch 2, mit einem Wiederholen der Schritte (802, 804, 806, 808, 810, 812) zum Aufbau einer elektrochemischen Energiespeichereinheit, um eine weitere Einheit zu erhalten, mit einem Schritt des Anordnens der weiteren Einheit, so dass eine dritte Kontaktfläche der weiteren Stapelzelle der weiteren Einheit an dem zweiten Ableiter (11) der ersten Stapelzelle (40) der ersten Einheit angeordnet wird, und mit einem Schritt des Verbindens der Batteriezelle (10) der ersten Stapelzelle der ersten Einheit mit dem Zellverbinder der weiteren Stapelzelle (40) der weiteren Einheit mittels eines Kaltumformverfahrens, bei dem der zweite Ableiter der Batteriezelle der ersten Stapelzelle der ersten Einheit mit der dritten Kontaktläche des Zellverbinders der weiteren Stapelzelle der weiteren Einheit verbunden wird.

4. Verfahren gemäß einem der vorangegangenen Ansprüche, bei dem im Schritt (812) des Verbindens das Kaltumformverfahren ein Durchsetzfügeverfahren ist.

5. Verfahren gemäß einem der vorangegangenen Ansprüche, bei dem im Schritt des Verbindens (812) einer der Ableiter (11) und einer der Zellverbinder (30) zwischen einem Stempel (110) eines Werkzeugs und einer Matrize (100) des Werkzeugs positioniert werden und anschließend der Ableiter durch den Zellverbinder oder der Zellverbinder durch den Ableiter durchgesetzt wird.

6. Verfahren gemäß Anspruch 5, bei dem das Werkzeug eine Zange ist.

7. Verfahren gemäß einem der vorangegangenen Ansprüche, mit einem Schritt des Bereitstellens einer Wärmesenke (70), die eine ebene Wärmeübergangsfläche aufweist, und mit einem Schritt des Verbindens der Wärmesenke mit der elektrochemischen Energiespeichereinheit, wobei die Wärmeübergangsfläche mit zumindest einer zweiten Kontaktfläche verbunden wird.

8. Elektrochemische Energiespeichereinheit mit zumindest einer Stapelzelle (40) mit folgenden Merkmalen:
einer Batteriezelle (10), die einen Batteriekörper und zumindest einen ersten Ableiter (11) und zumindest einen zweiten Ableiter (11) aufweist, wobei der erste Ableiter und der zweite Ableiter über eine Außenkontur des Batteriekörpers hinausragen;
einem Zellverbinder (30), der zumindest eine erste Kontaktfläche und eine zweite Kontaktfläche aufweist, wobei die erste Kontaktfläche und die zweite Kontaktfläche in einen Winkel zueinander angeordnet sind, und wobei der Zellverbinder zumindest einen Durchbruch (31) in der zweiten Kontaktfläche aufweist, wobei der erste Ableiter (11) auf der ersten Kontaktfläche angeordnet ist und der erste Ableiter mittels eines Kaltumformverfahrens mit der ersten Kontaktfläche verbunden ist; und
einem Rahmen (20), der zumindest eine Öffnung und zumindest eine Auflagefläche aufweist, wobei die Auflagefläche zumindest zwei Einbuchtungen (21) aufweist, wobei der Batteriekörpers in der Öffnung angeordnet ist und wobei die erste Kontaktfläche auf der Auflagefläche angeordnet ist, und wobei zumindest eine der Aussparungen an dem Durchbruch (31) ausgerichtet ist.

9. Elektrochemische Energiespeichereinheit gemäß Anspruch 8, mit einer weiteren Stapelzelle (40), wobei eine Batteriezelle der weiteren Stapelzelle mit dem Zellverbinder (30) der ersten Stapelzelle (40) mittels eines Kaltumformverfahrens verbunden ist, und ein zweiter Ableiter der weiteren Stapelzelle mit der dritten Kontaktfläche der ersten Stapelzelle verbunden ist.

10. Elektrochemische Energiespeichereinheit gemäß Anspruch 8 oder 9, bei der der Rahmen (20) zwei einander gegenüberliegende Rahmenelemente und zwei einander gegenüberliegende Verbindungselemente aufweist, die zwischen den Rahmenelementen angeordnet sind, wobei die zwei Rahmenelemente jeweils eine Auflagefläche und an einem der Öffnung gegenüberliegend Rand zwei Einbuchtungen zum Bilden der zwei Aussparungen (21) aufweisen.

## Claims

1. A method for the assembly of an electrochemical energy storage unit comprising the following steps:
providing (802) a battery cell (10) having a battery body and at least one first arrester (11) and at least one second arrester (11), wherein the first arrester and the second arrester extend beyond an outer contour of the battery body;
providing (804) a cell connector (30) having at least one first contact surface and one second contact surface, wherein the first contact surface and the second contact surface are arranged in an angle with respect to each other and wherein the cell connector has at least one aperture (31) in the second contact surface;
providing (806) a frame (20) having at least one opening and at least one support area, wherein the support area has at least two indentations (21);
joining (808) the frame (20) and the cell connector (30), wherein the first contact surface is arranged on the support area and wherein at least one of the indentations (21) is aligned at the aperture (31) in order to obtain a stacking unit;
inserting (810) the battery cell (10) into the stacking unit, wherein the battery body is arranged in the opening and the first arrester (11) is arranged on the first contact surface in order to obtain a battery stacking unit; and
connecting (812) the battery cell (10) and the cell connector (30) by means of a cold forming procedure, wherein the first arrester (11) is connected to the first contact surface in order to obtain a first stacking cell (40).

2. The method according to claim 1, wherein in the step (804) of providing the cell connector, the cell connector (30) has a third contact surface which is arranged at an edge of the second contact surface opposite the first contact surface and in an angle to the second contact surface, and comprising a repetition of the steps (802, 804, 806, 808, 810, 812) for the assembly of an electrochemical energy storage unit in order to obtain a further stacking cell (40), and comprising a step of arranging the first stacking cell (40) and the further stacking cell so that the cell connector of the further stacking cell is aligned at a side of the frame (20) of the first stacking cell opposite the cell connector of the first stacking cell and the second arrester of the further stacking cell is arranged at the third contact surface of the cell connector of the first stacking cell, and comprising a step of connecting the battery cell of the further stacking cell with the cell connector of the first stacking cell by means of a cold forming procedure, wherein the second arrester (11) of the further stacking cell is connected to the third contact surface of the first stacking cell in order to obtain a first unit.

3. The method according to claim 2, comprising the repetition of the steps (802, 804, 806, 808, 810, 812) for the assembly of an electrochemical energy storage unit in order to obtain a further unit, comprising a step of arranging the further unit so that a third contact surface of the further stacking cell of the further unit is arranged at the second arrester (11) of the first stacking cell (40) of the first unit, and comprising a step of connecting the battery cell (10) of the first stacking cell of the first unit to the cell connector of the further stacking cell (40) of the further unit by means of a cold forming procedure, wherein the second arrester of the battery cell of the first stacking cell of the first unit is connected to the third contact surface of the cell connector of the further stacking cell of the further unit.

4. The method according to one of the preceding claims, wherein in the step (812) of connecting the cold forming procedure is a clinching process.

5. The method according to one of the preceding claims, wherein in the connecting step (812) one of the arresters (11) and one of the cell connectors (30) are positioned between a punch (110) of a tool and a die (100) of the tool and afterwards the arrester is pushed through the cell connector or the cell connector is pushed through the arrester.

6. The method according to claim 5, wherein the tool is a pincer.

7. The method according to one of the preceding claims, comprising a step of providing a heat sink (70) with a flat heat transfer surface, and comprising a step of connecting the heat sink to the electrochemical energy storage unit, wherein the heat transfer surface is connected to at least one second contact surface.

8. An electrochemical energy storage unit with at least one stacking cell (40), having the following features:
a battery cell (10) having a battery body and at least one first arrester (11) and at least one second arrester (11), wherein the first arrester and the second arrester extend beyond an outer contour of the battery body;
a cell connector (30) having at least one first contact surface and one second contact surface, wherein the first contact surface and the second contact surface are arranged in an angle with respect to each other, and wherein the cell connector has at least one aperture (31) in the second contact surface, wherein the first arrester (11) is arranged on the first contact surface and the first arrester is connected to the first contact surface by means of a cold forming procedure; and
a frame (20) having at least one opening and at least one support area, wherein the support area has at least two indentations (21), wherein the battery body is arranged in the opening and wherein the first contact surface is arranged on the support area, and wherein at least one of the recesses is aligned at the aperture (31).

9. The electrochemical energy storage unit according to claim 8, having a further stacking cell (40), wherein one battery cell of the further stacking cell is connected to the cell connector (30) of the first stacking cell (40) by means of a cold forming procedure and one second arrester of the further stacking cell is connected to the third contact surface of the first stacking cell.

10. The electrochemical energy storage unit according to claim 8 or 9, wherein the frame (20) has two frame elements opposite each other and two connection elements opposite each other which are arranged between the frame elements, wherein the two frame elements each have a support area and two indentations at the edge opposite the opening in order to form the two recesses (21).

## Revendications

1. Procédé de montage d'un ensemble d'accumulateurs d'énergie électrochimique, comprenant les étapes suivantes consistant :
à fournir (802) un élément de batterie (10) qui présente un corps de batterie et au moins un premier parafoudre (11) et au moins un deuxième parafoudre (11), où le premier parafoudre et le deuxième parafoudre dépassent d'un contour extérieur du corps de la batterie ;
à fournir (804) un connecteur d'éléments (30) qui présente au moins une première surface de contact et une deuxième surface de contact, où la première surface de contact et la deuxième surface de contact sont disposées en formant un angle l'une par rapport à l'autre, et où le connecteur d'éléments présente au moins un passage (31) situé dans la deuxième surface de contact ;
à fournir (806) un cadre (20) qui présente au moins une ouverture et au moins une surface d'appui, où la surface d'appui présente au moins deux parties en creux (21) ;
à réunir (808) le cadre (20) et le connecteur d'éléments (30), où la première surface de contact est disposée sur la surface d'appui, et où au moins l'une des parties en creux (21) est alignée sur le passage (31) pour obtenir une unité d'empilement ;
à introduire (810) l'élément de batterie (10) dans l'unité d'empilement, où le corps de la batterie est disposé dans l'ouverture, et le premier parafoudre (11) est disposé sur la première surface de contact, pour obtenir une unité d'empilement de la batterie ; et
à assembler (812) l'élément de batterie (10) avec le connecteur d'éléments (30), au moyen d'un procédé de formage à froid au cours duquel le premier parafoudre (11) est assemblé avec la première surface de contact, pour obtenir un premier élément d'empilement (40).

2. Procédé selon la revendication 1 où, au cours de l'étape (804) de la fourniture du connecteur d'éléments, le connecteur d'éléments (30) présente une troisième surface de contact qui, en formant un angle par rapport à la deuxième surface de contact, est disposée sur une arête de la deuxième surface de contact, ladite arête faisant face à la première surface de contact, ledit procédé comprenant une répétition des étapes (802, 804, 806, 808, 810, 812) prévues pour le montage d'un ensemble d'accumulateurs d'énergie électrochimique, pour obtenir un autre élément d'empilement (40), et comprenant une étape consistant à disposer le premier élément d'empilement (40) et l'autre élément d'empilement, de manière telle que le connecteur d'éléments de l'autre élément d'empilement soit aligné sur un côté du cadre (20) du premier élément d'empilement, ledit côté faisant face au connecteur d'éléments du premier élément d'empilement, et le deuxième parafoudre de l'autre élément d'empilement est disposé sur la troisième surface de contact du connecteur d'éléments du premier élément d'empilement, et comprenant une étape consistant à assembler l'élément de batterie de l'autre élément d'empilement, avec le connecteur d'éléments du premier élément d'empilement, au moyen d'un procédé de formage à froid au cours duquel le deuxième parafoudre (11) de l'autre élément d'empilement est assemblé avec la troisième surface de contact du premier élément d'empilement, pour obtenir un premier ensemble.

3. Procédé selon la revendication 2, comprenant une répétition des étapes (802, 804, 806, 808, 810, 812) prévues pour le montage d'un ensemble d'accumulateurs d'énergie électrochimique, pour obtenir un autre ensemble, ledit procédé comprenant une étape de l'agencement de l'autre ensemble, de sorte qu'une troisième surface de contact de l'autre élément d'empilement de l'autre ensemble est disposée sur le deuxième parafoudre (11) du premier élément d'empilement (40) du premier ensemble, et comprenant une étape d'assemblage de l'élément de batterie (10) du premier élément d'empilement du premier ensemble, avec le connecteur d'éléments de l'autre élément d'empilement (40) de l'autre ensemble, au moyen d'un procédé de formage à froid au cours duquel le deuxième parafoudre de l'élément de batterie du premier élément d'empilement du premier ensemble est assemblé avec la troisième surface de contact du connecteur d'éléments de l'autre élément d'empilement de l'autre ensemble.

4. Procédé selon l'une quelconque des revendications précédentes, dans lequel, au cours de l'étape (812) de l'assemblage, le procédé de formage à froid est un procédé de jointoiement par clinchage.

5. Procédé selon l'une quelconque des revendications précédentes, dans lequel, au cours de l'étape de l'assemblage (812), l'un des parafoudres (11) et l'un des connecteurs d'éléments (30) sont positionnés entre un poinçon (110) d'un outil et une matrice (100) de l'outil et, ensuite, le parafoudre est clinché par le connecteur d'éléments ou bien le connecteur d'éléments est clinché par le parafoudre.

6. Procédé selon la revendication 5, dans lequel l'outil est une pince.

7. Procédé selon l'une quelconque des revendications précédentes, comprenant une étape consistant à fournir un dissipateur de chaleur (70) qui présente une surface plane de transfert de chaleur, et ledit procédé comprend une étape d'assemblage du dissipateur de chaleur avec l'ensemble d'accumulateurs d'énergie électrochimique, où la surface de transfert de chaleur est assemblée avec au moins une deuxième surface de contact.

8. Ensemble d'accumulateurs d'énergie électrochimique comprenant au moins un élément d'empilement (40), ledit ensemble ayant les caractéristiques suivantes :
un élément de batterie (10) qui présente un corps de batterie et au moins un premier parafoudre (11) et au moins un deuxième parafoudre (11), où le premier parafoudre et le deuxième parafoudre dépassent d'un contour extérieur du corps de la batterie ;
un connecteur d'éléments (30) qui présente au moins une première surface de contact et une deuxième surface de contact, où la première surface de contact et la deuxième surface de contact sont disposées en formant un angle l'une par rapport à l'autre, et où le connecteur d'éléments présente au moins un passage (31) situé dans la deuxième surface de contact, où le premier parafoudre (11) est disposé sur la première surface de contact, et le premier parafoudre est assemblé avec la première surface de contact, au moyen d'un procédé de formage à froid ; et
un cadre (20) qui présente au moins une ouverture et au moins une surface d'appui, où la surface d'appui présente au moins deux parties en creux (21), où le corps de la batterie est disposé dans l'ouverture, et où la première surface de contact est disposée sur la surface d'appui, et où au moins l'un des évidements est aligné sur le passage (31).

9. Ensemble d'accumulateurs d'énergie électrochimique selon la revendication 8, comprenant un autre élément d'empilement (40), où un élément de batterie de l'autre élément d'empilement est assemblé avec le connecteur d'éléments (30) du premier élément d'empilement (40), au moyen d'un procédé de formage à froid, et un deuxième parafoudre de l'autre élément d'empilement est assemblé avec la troisième surface de contact du premier élément d'empilement.

10. Ensemble d'accumulateurs d'énergie électrochimique selon la revendication 8 ou 9, dans lequel le cadre (20) présente deux éléments de cadre se faisant face l'un l'autre et deux éléments d'assemblage se faisant face l'un l'autre, éléments d'assemblage qui sont disposés entre les éléments de cadre, où les deux éléments de cadre présentent à chaque fois une surface d'appui et, au niveau d'un bord faisant face à l'ouverture, présentent deux parties en creux servant à la formation des deux évidements (21).
